# EUROPEAN PATENT APPLICATION

(11) **EP 4 644 470 A1**
(43) Date of publication of application: **05.11.2025**
(21) Application number: 23912065.2
(22) Date of filing: 25.12.2023
(51) Int. Cl.: C08J 9/16, C08L 23/10

(54) **POLYPROPYLENE-BASED RESIN FOAM PARTICLE, AND POLYPROPYLENE-BASED RESIN FOAM PARTICLE MOLDED ARTICLE**

(30) Priority: 27.12.2022 JP 2022210534
(71) Applicant: JSP Corporation, Tokyo 100-0005 (JP)
(72) Inventor: MASUMOTO, Hisashi, Yokkaichi-shi Mie 510-0881 (JP)
(74) Representative: KBN IP Patentanwälte Partnerschaft mbB
(86) International application number: PCT/JP2023/046466
(87) International publication number: WO 2024/143286

(57) **Abstract**

Provided are polypropylene resin expanded beads containing a biomass-derived polypropylene resin and capable of providing an excellent polypropylene resin expanded beads molded body, and a polypropylene resin expanded beads molded body produced using the polypropylene resin expanded beads.

In the polypropylene resin expanded beads, a base material resin of the expanded beads contains biomass-derived polypropylene resin A containing a biomass-derived monomer component in a molecular chain and fossil fuel-derived polypropylene resin B, and the base material resin contains 3% by weight or more and 60% by weight or less of the biomass-derived polypropylene resin A and 40% by weight or more and 97% by weight or less of the fossil fuel-derived polypropylene resin B (a total of both is 100% by weight); and the expanded beads molded body is obtained by in-mold molding of the polypropylene resin expanded beads.

## Description

### Technical Field

The present invention relates to polypropylene resin expanded beads containing a biomass-derived polypropylene resin, and a polypropylene resin expanded beads molded body produced using the polypropylene resin expanded beads.

### Background Art

It is known that a polypropylene resin expanded beads molded body excellent in strength and buffering characteristics is obtained by in-mold molding of polypropylene resin expanded beads containing a polypropylene resin. For example, the polypropylene resin expanded beads molded body is used for various applications such as packaging materials, automobile members, and building members.

In recent years, awareness of environmental loads such as increase in carbon dioxide concentration in the atmosphere and depletion of fossil fuel resources has increased. For this circumstance, a technique related to a polyethylene resin expanded sheet containing a plant-derived polyethylene resin having a high plant degree has been proposed (for example, Patent Literature 1).

### Citation List

### Patent Literature

Patent Literature 1: JP 2013-60528 A

### Summary of Invention

### Technical Problem

On the other hand, with regard to a polypropylene resin expanded body, a technique related to resin expanded beads using a biomass-derived polypropylene resin raw material containing a plant-derived polypropylene resin has not been proposed so far. Therefore, it is desired to propose a technique related to polypropylene resin expanded beads and a polypropylene resin expanded beads molded body capable of coping with the above-described reduction in environmental loads using a biomass-derived raw material.

The present invention has been made in view of such a demand, and polypropylene expanded beads of the present invention contain a biomass-derived polypropylene resin, and the polypropylene expanded beads can provide a polypropylene resin expanded beads molded body having a good molded state.

### Solution to Problem

In polypropylene resin expanded beads of the present invention, a base material resin of the expanded beads contains biomass-derived polypropylene resin A containing a biomass-derived monomer component in a molecular chain and fossil fuel-derived polypropylene resin B, and the base material resin contains 3% by weight or more and 60% by weight or less of the biomass-derived polypropylene resin A and 40% by weight or more and 97% by weight or less of the fossil fuel-derived polypropylene resin B (a total of both is 100% by weight).

A polypropylene resin expanded beads molded body of the present invention is obtained by in-mold molding of the polypropylene resin expanded beads of the present invention.

### Advantageous Effects of Invention

The polypropylene resin expanded beads of the present invention are configured to contain a biomass-derived polypropylene resin, and contribute to reduction in environmental loads. Furthermore, the polypropylene resin expanded beads of the present invention have good moldability, and the expanded beads molded body of the present invention has good molded states such as fuse-bond characteristics, secondary expansion characteristics, and recovery characteristics.

Therefore, the polypropylene resin expanded beads molded body of the present invention can be used in various fields as in the conventional one while reducing environmental loads.

### Brief Description of Drawings

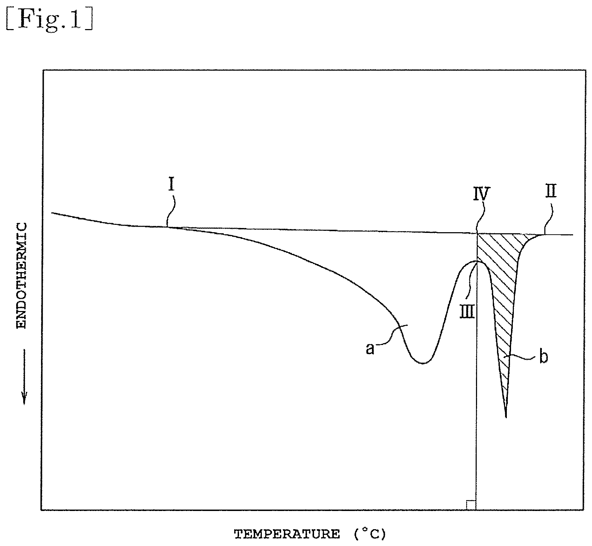

Fig. 1 is a DSC curve obtained according to the testing methods for heat of transitions of plastics described in JIS K7122:2012 for obtaining a total heat quantity of fusion and a high-temperature peak heat quantity of polyolefin resin expanded beads according to an embodiment of the present invention.

### Description of Embodiments

A base material resin of polypropylene resin expanded beads of the present invention (hereinafter, the polypropylene resin expanded beads of the present invention may be simply referred to as expanded beads of the present invention) contains a polypropylene resin as a main component, and contains biomass-derived polypropylene resin A containing a biomass-derived monomer component in a molecular chain and a fossil fuel-derived polypropylene resin B.

The base material resin in the expanded beads of the present invention contains 3% by weight or more and 60% by weight or less of the biomass-derived polypropylene resin A and 40% by weight or more and 97% by weight or less of the fossil fuel-derived polypropylene resin B (a total of both is 100% by weight). That is, the content of the biomass-derived polypropylene resin A is 3% by weight or more and 60% by weight or less, and the content of the fossil fuel-derived polypropylene resin B is 40% by weight or more and 97% by weight or less, with respect to the total of 100% by weight of the biomass-derived polypropylene resin A and the fossil fuel-derived polypropylene resin B contained in the base material resin.

The expanded beads of the present invention contain a biomass-derived polypropylene resin, and contribute to reduction in environmental loads. Furthermore, by in-mold molding of the expanded beads, it is possible to provide an expanded beads molded body having good molded states such as fuse-bond characteristics, secondary expansion characteristics, and recovery characteristics after age.

The biomass in the present invention refers to a renewable organic resource derived from a living organism (however, organic resources derived from fossil fuels such as petroleum and coal are excluded). The biomass-derived polypropylene resin A refers to a polypropylene resin containing a biomass-derived monomer component obtained by polymerizing biomass-derived monomers in a molecular chain. The polypropylene resin A may be composed of only a biomass-derived monomer component, or may be composed of a biomass-derived monomer component and a fossil fuel-derived monomer component.

The fossil fuel-derived polypropylene resin B refers to a polypropylene resin obtained by substantially polymerizing only fossil fuel-derived monomers. The fossil fuel-derived polypropylene resin B preferably contains only a fossil fuel-derived monomer component in a molecular chain.

In the present invention, the biomass-derived monomer refers to propylene, ethylene, or an α-olefin having 4 or more and 8 or less carbon atoms produced from a biomass raw material. In the present invention, the biomass-derived monomer component refers to a constituent unit in a polymer produced by addition polymerization of the monomer, that is, propylene, ethylene, or an α-olefin having 4 or more and 8 or less carbon atoms. A method for producing a biomass-derived monomer is not particularly limited, and a biomass-derived monomer can be obtained by a conventionally known method such as dehydration of an alcohol derived from a biomass raw material or decomposition of naphtha derived from a biomass raw material. Examples of the biomass raw material used for producing a biomass-derived monomer include monosaccharides, polysaccharides, vegetable fats and oils, and animal fats and oils obtained from agricultural and livestock products, forest products, algae, and the like. In the present invention, the biomass raw material used for producing a biomass-derived monomer is preferably bionaphtha produced from waste edible oils, black liquors, tall oils, palm oil mill effluents during palm oil production, fats and oils contained in microalgae, and the like, and use of propylene obtained by decomposing the bionaphtha is preferable in the present invention, from the viewpoint of non-competition with food and contributing to a recycling-type society by using by-products and waste biomass.

In the present invention, the fossil fuel-derived monomer refers to propylene, ethylene, or an α-olefin having 4 or more and 8 or less carbon atoms produced from fossil fuel. A method for producing a fossil fuel-derived monomer is not particularly limited, and a fossil fuel-derived monomer can be produced by a known method carried out in the petrochemical industry. For example, the fossil fuel-derived monomer can be obtained by thermal decomposition and fractionation of naphtha obtained in a process of petroleum refining.

Hereinafter, the present invention will be described in more detail. In the following description, a preferable numerical range of the present invention may be appropriately indicated. In this case, a preferred range, a more preferred range, and a particularly preferred range regarding the upper limit and the lower limit of the numerical range can be determined from all combinations of the upper limit and the lower limit. In the following description, the biomass-derived polypropylene resin A may be simply referred to as polypropylene resin A, and the fossil fuel-derived polypropylene resin B may be simply referred to as polypropylene resin B.

### [Base material resin]

As described above, the base material resin in the present invention contains the biomass-derived polypropylene resin A in a range of 3% by weight or more and 60% by weight or less and the fossil fuel-derived polypropylene resin B in a range of 40% by weight or more and 97% by weight or less (a total of both is 100% by weight).

According to the study of the present inventor, it was confirmed that moldability of expanded beads using the biomass-derived polypropylene resin A as the base material resin is easily impaired. Therefore, it has been found that it is possible to provide an expanded beads molded body having a good molded state by blending the biomass-derived polypropylene resin A with the fossil fuel-derived polypropylene resin B and setting the blending ratio of both within the above range.

From the viewpoint of providing an expanded beads molded body having a more excellent molded state and from the viewpoint of sufficiently utilizing a biomass-derived polypropylene resin to greatly contribute to reduction in environmental loads, the ratio of the biomass-derived polypropylene resin A in a total of 100% by weight of the polypropylene resin A and the polypropylene resin B is preferably 5% by weight or more and 50% by weight or less, more preferably 7% by weight or more and 45% by weight or less, and still more preferably 10% by weight or more and 30% by weight or less. Examples of a preferable numerical range of the biomass-derived polypropylene resin A in a total of 100% by weight of the biomass-derived polypropylene resin A and the fossil fuel-derived polypropylene resin B can include a range having any one of 5%, 7%, and 10% as a lower limit value and any one of 50%, 45%, and 40% as an upper limit. The total blending ratio of the polypropylene resin A and the polypropylene resin B in the base material resin is preferably 80% by weight or more, more preferably 90% by weight, and still more preferably 95% by weight or more in 100% by weight of the base material resin.

In the present specification, the polypropylene resin refers to a homopolymer of propylene, or a polypropylene copolymer containing a propylene-derived constituent unit in an amount of more than 50% by weight. Examples of the homopolymer of propylene include homopolymers of propylene such as isotactic polypropylene, syndiotactic polypropylene, and atactic polypropylene.

Examples of the polypropylene copolymer include copolymers of propylene such as a propylene-ethylene copolymer, a propylene-butene copolymer, and a propylene-ethylene-butene copolymer and ethylene or an α-olefin having 4 or more and 8 or less carbon atoms; a propyleneacrylic acid copolymer; and a propylene-maleic anhydride copolymer. These copolymers may be any of a block copolymer, a random copolymer, and a graft copolymer.

The polymers described above may be crosslinked, and are preferably non-crosslinked from the viewpoint of further contributing to reduction in environmental loads.

The base material resin in the present invention may contain other polymers and additives in addition to the above-described polypropylene resin.

Examples of the other polymers include thermoplastic resins other than polypropylene resins such as polyethylene resins, polystyrene resins, polyamide resins, and polyester resins; and elastomers such as olefin thermoplastic elastomers and styrene thermoplastic elastomers. Two or more of these other polymers may be contained.

The blending ratio of the other polymers in the base material resin is, in 100% by weight of the base material resin, preferably 5% by weight or less, more preferably 3% by weight or less, still more preferably 1% by weight or less, and most preferably 0% by weight, that is, the expanded beads containing only a polypropylene resin as a polymer.

As additives other than the polymers, for example, any one or more of functional additives such as colorants, antioxidants, antistatic agents, surfactants, heat stabilizers, light stabilizers, ultraviolet absorbers, and flame retardants may be added. The blending ratio of the additives in the base material resin is preferably 20% by weight or less, more preferably 10% by weight or less, and still more preferably 5% by weight or less in 100% by weight of the base material resin.

In the present specification, the biomass-derived polypropylene resin A is composed of the above-described polypropylene resin. The polypropylene resin A may contain two or more of biomass-derived polypropylene resins. The polypropylene resin A is preferably a homopolymer of propylene or a propylene-ethylene block copolymer, and more preferably a homopolymer of propylene, from the viewpoint of providing expanded beads capable of achieving both expansion of the range of steam pressure capable of molding an expanded beads molded body and shortening of the molding cycle.

In the present specification, the fossil fuel-derived polypropylene resin B is composed of the above-described polypropylene resin. The polypropylene resin B may be derived from fossil fuel such as petroleum fuel, may be one type, or may be a mixture of two or more types of fossil fuel-derived polypropylene resins. The polypropylene resin B is preferably a propylene-ethylene random copolymer or a propylene-ethylene-butene random copolymer, and more preferably a propylene-ethylene random copolymer, from the viewpoint of providing expanded beads that exhibit a good molded state and can obtain an expanded beads molded body having good surface characteristics.

The polypropylene resin contained in the polypropylene resin A and the polypropylene resin contained in the polypropylene resin B constituting the base material resin may be the same type of polypropylene resin or different type polypropylene resins.

For example, each of the biomass-derived polypropylene resin A and the fossil fuel-derived polypropylene resin B may be a homopolymer of propylene, or may be a polypropylene copolymer, or one may be a homopolymer of propylene and the other may be a polypropylene copolymer.

In one of preferred embodiments of the present invention, the fossil fuel-derived polypropylene resin B preferably contains a polypropylene copolymer, and more preferably contains a propylene-ethylene random copolymer. By blending the biomass-derived polypropylene resin A with the fossil fuel-derived polypropylene resin B containing a polypropylene copolymer such as a propylene-ethylene random copolymer, it is possible to provide an expanded beads molded body having a better molded state. From such a viewpoint, the fossil fuel-derived polypropylene resin B is preferably a propylene-ethylene random copolymer, and the ethylene component content of the propylene-ethylene random copolymer is more preferably 1% by weight or more and 5% by weight or less, and still more preferably 1.5% by weight or more and 4% by weight or less.

For example, an aspect in which the biomass-derived polypropylene resin A is a homopolymer of propylene or a propylene-ethylene block copolymer, and the fossil fuel-derived polypropylene resin B is a polypropylene copolymer such as a propylene-ethylene random copolymer is preferable in the expanded beads of the present invention, and an aspect in which the biomass-derived polypropylene resin A is a homopolymer of propylene, and the fossil fuel-derived polypropylene resin B is a polypropylene copolymer such as a propylene-ethylene random copolymer is further preferable in the expanded beads of the present invention.

### (Biobased carbon content of polypropylene resin A)

In the present invention, the biobased carbon content of the biomass-derived polypropylene resin A measured by ASTM D6866-21 is preferably 1% or more and 100% or less. From the viewpoint of contributing to reduction in environmental loads while favorably maintaining the molded state of the provided expanded beads molded body, the biobased carbon content of the polypropylene resin A is more preferably 10% or more and 50% or less, still more preferably 20% or more and 48% or less, and particularly preferably 25% or more and 45% or less. Examples of a preferable numerical range of the biobased carbon content can include a range having any one of 10%, 20%, and 25% as a lower limit value and any one of 50%, 48%, and 45% as an upper limit value.

### (Biobased carbon content of polypropylene resin B)

In the present invention, the biobased carbon content of the fossil fuel-derived polypropylene resin B measured by ASTM D6866-21 is 0%.

### (Melting point of base material resin)

The melting point Tm_{S} of the base material resin is not particularly limited, and is preferably 135°C or higher and 160°C or lower, and more preferably 140°C or higher and 157°C or lower. Examples of a preferable numerical range of the melting point Tm_{S} can include a range having any one of 135°C and 140°C as a lower limit value and any one of 160°C and 157°C as an upper limit. Even when the polypropylene resin A and the polypropylene resin B contained in the expanded beads have different melting points, the finally provided expanded beads molded body has a good molded state by adjusting the base material resin to have a melting point Tm_{S} in the above-described range.

The melting point Tm_{S} of the base material resin can be determined based on JIS K7121:2012. At this time, as condition adjustment of a test piece, "(2) Case where melting temperature is measured after constant heat treatment" is adopted.

More specifically, the peak top temperature of the melting peak determined by the DSC curve obtained when a pellet-shaped base material resin is used as a test piece, and based on heat-flux differential scanning calorimetry described in JIS K7121:2012, the temperature is raised from 23°C to 200°C at a heating rate of 10°C/min, then lowered to 23°C at a cooling rate of 10°C/min, and raised again from 23°C to 200°C at a heating rate of 10°C/min is defined as the melting point of the polypropylene resin. When two or more melting peaks appear in the DSC curve, the peak top temperature of the melting peak having the largest area is defined as the melting point. At this time, it is possible to determine the melting peak having the largest area by distinguishing respective melting peaks with the temperature of the valley of the DSC curve positioned between the peak top temperatures of the respective melting peaks as a boundary and comparing the areas (heat quantity of fusion) of the respective melting peaks. The temperature of the valley of the DSC curve can be determined from the temperature at which the value of the vertical axis of the differential curve is 0 with reference to the differential curve (DDSC) of the DSC. Examples of the measuring apparatus include a heat-flux differential scanning calorimeter (manufactured by SII NanoTechnology Inc., model number: DSC7020).

### (Melting point of resin constituting base material resin)

In the present invention, the melting point Tm_{A} of the biomass-derived polypropylene resin A is not particularly limited. An example is polypropylene resin A having a melting point Tm_{A} of 155°C or higher and 170°C or lower. The melting point Tm_{A} is preferably 158°C or higher and 170°C or lower, and polypropylene resin A having the melting point Tm_{A} of 160°C or higher and 170°C or lower is more preferable as the resin constituting the base material resin. In contrast to the polypropylene resin A having such a melting point range, the melting point Tm_{B} of the fossil fuel-derived polypropylene resin B is preferably 130°C or higher and 150°C or lower, and more preferably 135°C or higher and 145°C or lower. By blending the polypropylene resin A and the polypropylene resin B having such melting point ranges, the melting point Tm_{S} of the base material resin can be easily adjusted to a desired range, and the finally provided expanded beads molded body has a good molded state. From the above viewpoint, the base material resin preferably contains biomass-derived polypropylene A having a melting point Tm_{A} of 158°C or higher and 170°C or lower and fossil fuel-derived polypropylene resin B having a melting point Tm_{B} of 130°C or higher and 150°C or lower, and more preferably contains biomass-derived polypropylene A having a melting point Tm_{A} of 160°C or higher and 170°C or lower and fossil fuel-derived polypropylene resin B having a melting point Tm_{B} of 135°C or higher and 145°C or lower.

The melting point Tm_{A} of the polypropylene resin A and the melting point Tm_{B} of the polypropylene resin B are measured by the same measurement method as in the measurement of the melting point Tm_{S} of the base material resin described above except that pellet-shaped polypropylene resin A or pellet-shaped polypropylene resin B is used instead of the pellet-shaped base material resin.

### (Crystallization temperature of resin constituting base material resin)

In the present invention, the crystallization temperature Tc_{A} of the biomass-derived polypropylene resin A is preferably 110°C or higher and 130°C or lower, more preferably 113°C or higher and 128°C or lower, and still more preferably 115°C or higher and 123°C or lower from the viewpoint of shortening the molding cycle during molding of the expanded beads. Examples of a preferable numerical range of the crystallization temperature Tc_{A} can include a range having any one of 110°C, 113°C, and 115°C as a lower limit value and any one of 130°C, 128°C, and 123°C as an upper limit. The crystallization temperature Tc_{B} of the fossil fuel-derived polypropylene resin B is preferably 90°C or higher and 110°C or lower, more preferably 92°C or higher and 109°C or lower, and still more preferably 94°C or higher and 108°C or lower from the viewpoint of being able to obtain expanded beads excellent in the molding range. Examples of a preferable numerical range of the crystallization Tc_{B} can include a range having any one of 90°C, 92°C, and 94°C as a lower limit value and any one of 110°C, 109°C, and 108°C as an upper limit.

The crystallization temperature Tc_{A} of the polypropylene resin A and the crystallization temperature Tc_{B} of the polypropylene resin B mean the peak top temperature of the crystallization peak determined by heat-flux differential scanning calorimetry based on JIS K7121:2012. As condition adjustment of a test piece, "(2) Case where melting temperature is measured after constant heat treatment" is adopted, and 10°C per minute is adopted as the cooling rate. When two or more crystallization peaks appear, the peak top temperature of the crystallization peak having the largest area is defined as the crystallization temperature.

### (Melt mass-flow rate (MFR_{A}) of polypropylene resin A)

The biomass-derived polypropylene resin A preferably has a melt mass-flow rate (MFR_{A}) measured at 230°C under a load of 2.16 kg of 1 g/10 min or more and 100 g/10 min or less. Further, use of the polypropylene resin A satisfying (I) or (II) shown below is more preferable.
(I) The biomass-derived polypropylene resin A is a homopolymer of propylene, and has a melt mass-flow rate (MFR_{A}) measured at 230°C under a load of 2.16 kg of 1 g/10 min or more and 5 g/10 min or less.
(II) The biomass-derived polypropylene resin A is a propylene-ethylene block copolymer, and has a melt mass-flow rate (MFR_{A}) measured at 230°C under a load of 2.16 kg of 50 g/10 min or more and 80 g/10 min or less.

A particularly preferable range is the range of (I) described above.

When the melt mass-flow rate (MFR_{A}) is within the above range, the range of steam pressure capable of molding during in-mold molding of expanded beads is widened, and expanded beads excellent in the molding range can be obtained.

### (Melt mass-flow rate (MFR_{B}) of polypropylene resin B)

The fossil fuel-derived polypropylene resin B preferably has a melt mass-flow rate (MFR_{B}) measured at 230°C under a load of 2.16 kg of 5 g/10 min or more and 20 g/10 min or less. In particular, it is preferable that the fossil fuel-derived polypropylene resin B is a polypropylene copolymer such as a propylene-ethylene random copolymer, and has a melt mass-flow rate (MFR_{B}) measured at 230°C under a load of 2.16 kg of 5 g/10 min or more and 15 g/10 min or less.

When the melt mass-flow rate (MFR_{B}) is within the above range, the range of steam pressure capable of molding during in-mold molding of expanded beads is widened, and expanded beads excellent in the molding range can be obtained.

### (MFR_{A}/MFR_{B})

The ratio (MFR_{A}/MFR_{B}) of the melt mass-flow rate (MFR_{A}) of the biomass-derived polypropylene resin A measured at 230°C under a load of 2.16 kg to the melt mass-flow rate (MFR_{B}) of the fossil fuel-derived polypropylene resin B measured at 230°C under a load of 2.16 kg is preferably 0.2 or more and 0.8 or less, and more preferably 0.3 or more and 0.7 or less.

In particular, the melt mass-flow rate (MFR_{A}) of the polypropylene resin A that is a homopolymer of propylene is preferably 1 g/10 min or more and 5 g/10 min or less, and the ratio (MFR_{A}/MFR_{B}) is preferably 0.2 or more and 0.8 or less.

When the ratio (MFR_{A}/MFR_{B}) falls within the above-described range, the melt mass-flow rate (MFR_{S}) of the base material resin can be easily adjusted to fall within a desired range even when the melt mass-flow rate (MFR_{A}) of the biomass-derived polypropylene resin A is a low value in production of a general polypropylene resin expanded beads molded body. As a result, it is easy to provide a good expanded beads molded body.

### (Melt mass-flow rate (MFR_{S}) of base material resin)

The melt mass-flow rate (MFR_{S}) of the base material resin measured at 230°C under a load of 2.16 kg is preferably 5 g/10 min or more and 15 g/10 min or less. From the viewpoint of providing an expanded beads molded body having good surface characteristics, the melt mass-flow rate (MFR_{S}) of the base material resin is preferably 5 g/10 min or more and 15 g/10 min or less, more preferably 6 g/10 min or more and 12 g/10 min or less, and still more preferably 7 g/10 min or more and 10 g/10 min or less. Examples of a preferable numerical range of the melt mass-flow rate (MFRs) can include a range having any one of 5 g/10 min, 6 g/10 min, and 7 g/10 min as a lower limit value and any one of 15 g/10 min, 12 g/10 min, and 10 g/10 min as an upper limit.

For example, when the above-described ratio (MFR_{A}/MFR_{B}) is in a range of 0.2 or more and 0.8 or less and the melt mass-flow rate (MFR_{S}) of the base material resin is 5 g/10 min or more and 15 g/10 min or less, the range of steam pressure capable of molding during in-mold molding of expanded beads is widened, which is preferable from the viewpoint of obtaining expanded beads excellent in the molding range.

The melt mass-flow rate of each of the polypropylene resin A, the polypropylene resin B, and the base material resin described above is measured under the conditions of 230°C and a load of 2.16 kg based on JIS K7210-1:2014.

### [Expanded beads]

### (Biobased carbon content of expanded beads)

The expanded beads of the present invention obtained by using the base material resin described above contain the biomass-derived polypropylene resin A, contribute to reduction in environmental loads, and can provide a good expanded beads molded body of the present invention described later.

The biobased carbon content of the polypropylene expanded beads of the present invention measured by ASTM D6866-21 is preferably 1% or more and 30% or less. From the viewpoint of more sufficiently contributing to reduction in environmental loads and contributing to reduction in environmental loads while favorably maintaining the molded state of the provided expanded beads molded body, the biobased carbon content of the expanded beads is preferably 1% or more and 30% or less, more preferably 2% or more and 25% or less, still more preferably 5% or more and 21% or less, and particularly preferably 10% or more and 18% or less. Examples of a preferable numerical range of the biobased carbon content can include a range having any one of 1%, 2%, 5%, and 10% as a lower limit value and any one of 30%, 25%, 21%, and 18% as an upper limit.

### (Method for producing expanded beads)

The expanded beads of the present invention can be produced according to a known method for producing expanded beads, using a base material resin containing 3% by weight or more and 60% by weight or less of the biomass-derived polypropylene resin A and 40% by weight or more and 97% by weight or less of the fossil fuel-derived polypropylene resin B (a total of both is 100% by weight). As described above, the base material resin may appropriately contain other polymers and additives in addition to the polypropylene resin A and the polypropylene resin B.

For example, the expanded beads of the present invention can be produced by producing resin beads by an extrusion method using raw materials such as the polypropylene resin A and the polypropylene resin B described above, and expanding the resin beads. More specifically, first, a predetermined raw material is supplied to an extruder and kneaded to produce small pellet-shaped resin beads adjusted in weight and shape. Then, the resin beads are supplied to a pressure vessel charged with an aqueous dispersion medium such as water, an inorganic dispersant, and a dispersion auxiliary agent such as a surfactant, and a step of producing expanded beads including a dispersion step, a blowing agent impregnation step, and an expanding step is performed, whereby expanded beads can be produced.

The dispersion step is a step of dispersing the resin beads in an aqueous dispersion containing an inorganic dispersant in the pressure vessel. The blowing agent impregnation step is a step of impregnating the resin beads with a blowing agent such as carbon dioxide in the pressure vessel. The expanding step is a step of releasing the resin beads containing a blowing agent from the pressure vessel together with an aqueous dispersion medium and expanding the resin beads. In the method for producing the expanded beads of the present invention, an optional step can be appropriately added in addition to the above-described steps.

### (High-temperature peak of expanded beads, heat quantity of fusion of high-temperature peak, and total heat quantity of fusion)

From the viewpoint that the expanded beads of the present invention are adjusted to a good crystalline state, it is preferable that in a DSC curve (see Fig. 1) obtained by heat-flux differential scanning calorimetry in which the expanded beads are heated from 23°C to 200°C at a heating rate of 10°C/min, a melting peak (high-temperature peak) having a peak top temperature on a higher-temperature side than a peak top temperature of a main melting peak (intrinsic peak) of the expanded beads appears.

The DSC curve in this case means a DSC curve (DSC curve in the first heating) obtained by heating the expanded beads by the measurement method. In addition, the main melting peak (intrinsic peak) of the expanded beads means a peak generated by melting of intrinsic crystals of the base material resin constituting the expanded beads. The intrinsic peak is considered to be a peak that appears by melting of crystals usually possessed by the base material resin constituting the expanded beads.

On the other hand, the melting peak (high-temperature peak) having a peak top temperature on a higher-temperature side than a peak top temperature of an intrinsic peak is a peak present on a higher-temperature side than the intrinsic peak that can be confirmed by the first DSC curve. When this high-temperature peak appears, it is presumed that secondary crystals different from crystals usually possessed by the base material resin constituting the expanded beads is present. In the DSC curve in the second heating, only an intrinsic peak due to melting of crystals usually possessed by the base material resin constituting the expanded beads appears. The DSC curve in the second heating is a DSC curve obtained when the expanded beads are heated from 23°C to 200°C at a heating rate of 10°C/min (first heating), then cooled from 200°C to 23°C at a cooling rate of 10°C/min, and then heated again from 23°C to 200°C at a heating rate of 10°C/min (second heating). This intrinsic peak appears in both the DSC curve in the first heating and the DSC curve in the second heating. From the above, it is possible to determine the intrinsic peak and the high-temperature peak by comparing the shapes and the peak positions of the first and second DSC curves.

From the viewpoint of obtaining an expanded beads molded body excellent in the balance between buffering characteristics and stiffness, the heat quantity of fusion of the high-temperature peak is preferably 10 J/g or more and 50 J/g or less, more preferably 10 J/g or more and 30 J/g or less, and still more preferably 15 J/g or more and 25 J/g or less. In addition, examples of the range of the heat quantity of fusion of the high-temperature peak can include a range having any one of 10 J/g and 15 J/g as a lower limit value and any one of 50 J/g, 30 J/g, and 25 J/g as an upper limit.

In addition, from the viewpoint of widening the range of steam pressure capable of molding during in-mold molding of expanded beads, and obtaining expanded beads excellent in the molding range, the total heat quantity of fusion in the expanded beads of the present invention is preferably 60 J/g or more and 100 J/g or less, and more preferably 70 J/g or more and 90 J/g or less.

The high-temperature peak described above is adjusted, for example, by controlling the heating rate of the temperature in the pressure vessel or controlling the temperature in the pressure vessel to be held at a predetermined temperature for a predetermined time in the dispersion step and/or the blowing agent impregnation step described above. More specifically, for example, in the dispersion step and/or the blowing agent impregnation step described above, a first-stage holding step of holding the temperature in the pressure vessel at a temperature of (the melting point of the base material resin - 20°C) or higher and lower than (the end temperature of melting of the base material resin) for about 10 minutes to 60 minutes is performed. Thereafter, the temperature in the pressure vessel is adjusted from (the melting point of the base material resin - 15°C) to a temperature lower than (the end temperature of melting of the base material resin). Then, if necessary, a second-stage holding step of further holding at that temperature for about 10 minutes to 60 minutes is performed. Subsequently, by performing the expanding step, expanded beads having a high-temperature peak can be produced.

The high-temperature peak heat quantity and the total heat quantity of fusion of the expanded beads are determined from a DSC curve (see Fig. 1) in the first heating obtained by heating 1 to 3 mg of the expanded beads as a test piece at a heating rate of 10°C/min from 23°C to a temperature 30°C higher than that at the end time of the melting peak of the test piece based on the testing methods for heat of transitions of plastics described in JIS K7122:2012.

More specifically, in the DSC curve shown in Fig. 1, a straight line connecting point I corresponding to 80°C on the DSC curve and point II corresponding to the end temperature of melting of the expanded beads is drawn. The end temperature of melting is an end point on a high-temperature side of high-temperature peak b, and is an intersection of high-temperature peak b and the baseline on a higher-temperature side than high-temperature peak b in the DSC curve.

As shown in Fig. 1, a straight line connecting point I and point II is drawn, and then an intersection of a straight line passing through maximum point III existing between intrinsic peak a and high-temperature peak b and parallel to the vertical axis of the graph and a straight line connecting point I and point II is defined as IV.

Then, the area of a portion surrounded by a straight line connecting point I and point IV, a straight line connecting point III and point IV, and a DSC curve connecting point I and point III is defined as the area of intrinsic peak a. In addition, the area of a portion (shaded portion) surrounded by a straight line connecting point IV and point II, a straight line connecting point III and point IV, and a DSC curve connecting point III and point II is defined as the area of high-temperature peak b. The value of the total heat quantity of fusion of the expanded beads is calculated from the sum of the area of intrinsic peak a and the area of high-temperature peak b obtained as described above, and the value of the high-temperature peak heat quantity of the expanded beads is calculated from the area of high-temperature peak b.

### (Apparent density of expanded beads)

The apparent density of the expanded beads of the present invention is preferably 20 kg/m³ or more and 120 kg/m³ or less, and more preferably 30 kg/m³ or more and 90 kg/m³ or less, from the viewpoint of saving energy by suppressing the amount of steam used in molding.

The apparent density of the expanded beads is measured by the following method. First, the expanded beads to be measured are allowed to stand for 24 hours or more in an environment of a temperature of 23°C, a relative humidity of 50%, and 1 atm. The expanded beads group thus obtained having weight W (g) is filled in a measuring cylinder, and by lightly tapping the horizontal surface several times with the bottom surface of the measuring cylinder, the filling height of the expanded beads group in the measuring cylinder is stabilized. The bulk volume V (L) of the expanded beads group indicated by the scale of the measuring cylinder is read, and weight W of the expanded beads group is divided by the bulk volume V of the expanded beads group (W/V). By converting the value thus obtained into a unit of kg/m³, the apparent density (kg/m³) of the expanded beads can be obtained.

### (Average cell diameter of expanded beads)

The average cell diameter of the expanded beads of the present invention is preferably 40 µm or more and 200 µm or less, and more preferably 60 µm or more and 180 µm or less, from the viewpoint of further improving the surface smoothness of the expanded beads molded body.

The average cell diameter of the expanded beads is determined as follows. First, a photograph of a cross section obtained by bisecting the expanded beads is taken. A straight line is drawn so that the area of the cross section of the expanded beads is substantially bisected on the photograph taken, and the value (L/N) obtained by dividing a length L of a line segment from a peripheral edge of the expanded beads to the opposing peripheral edge by the number N of all cells in contact with the line segment is defined as the average cell diameter of one expanded bead. This operation is performed on 10 or more expanded beads, and the arithmetic average value is defined as the average cell diameter of the expanded beads.

### (Closed cell ratio of expanded beads)

From the viewpoint of widening the range of steam pressure capable of molding during in-mold molding of expanded beads, and obtaining expanded beads excellent in the molding range, the closed cell ratio of the expanded beads of the present invention is preferably 70% or more and 99% or less, and more preferably 80% or more and 99% or less.

The closed cell ratio of the expanded beads is measured as follows. First, an expanded beads group having a bulk volume of about 20 cm³ is immersed in water to measure an apparent volume Va of the expanded beads group. Next, the expanded beads group of which the apparent volume Va has been measured is sufficiently dried, and then the value (true volume Vx) of the volume (sum of the volume of the resin constituting the expanded beads and the total cell volume of the closed cell portion in the expanded beads) of the expanded beads group is measured in accordance with Procedure C described in ASTM-D2856-94. For the measurement of the true volume Vx, an air-comparison pycnometer is used. Examples of the air-comparison pycnometer include an air-comparison pycnometer type 1000 manufactured by Tokyo-Science Co., Ltd. Next, the closed cell ratio is calculated by the following formula (1). Using different measurement samples, the closed cell ratio is measured five times in the same procedure as described above, the arithmetic average value of the values obtained in each measurement is determined, and this is defined as the closed cell ratio of the expanded beads.
[Mathematical formula 1] Closed cell ratio (%) = (Vx - W/ρ) × 100/(Va - W/ρ)
Vx: True volume (cm³) of the expanded beads group measured by the above method
Va: Apparent volume (cm³) of the expanded beads group measured from an increase in water level when the expanded beads group is immersed in water in the measuring cylinder
W: Weight (g) of expanded beads group
ρ: Density (g/cm³) of resin constituting expanded beads

### [Expanded beads molded body]

Next, a polypropylene resin expanded beads molded body of the present invention (hereinafter, it is also simply referred to as an expanded beads molded body of the present invention) will be described. The expanded beads molded body of the present invention is obtained by in-mold molding of the polypropylene resin expanded beads of the present invention described above.

The expanded beads molded body of the present invention contains a biomass-derived polypropylene raw material, contributes to reduction in environmental loads, is excellent in fuse-bond characteristics in the expanded beads molded body, secondary expansion characteristics, and recovery characteristics after age, and can exhibit good moldability. In addition, the expanded beads molded body of the present invention has excellent surface smoothness, and the apparent density can be adjusted to a preferable range. Therefore, the expanded beads molded body of the present invention can be suitably used for various applications such as packaging materials, automobile members, and building materials, as with an expanded beads molded body produced using expanded beads produced only from a fossil fuel-derived polypropylene resin (hereinafter, the expanded beads molded body produced using expanded beads produced only from a fossil fuel-derived polypropylene resin is also simply referred to as a conventional expanded beads molded body).

### (Apparent density of expanded beads molded body)

The apparent density of the expanded beads molded body of the present invention is preferably 20 kg/m³ or more and 120 kg/m³ or less, and more preferably 30 kg/m³ or more and 90 kg/m³ or less, from the viewpoint of excellent balance between lightweight characteristics and mechanical characteristics such as stiffness.

The apparent density of the expanded beads molded body is calculated by dividing the weight of the expanded beads molded body by the volume calculated based on the outer dimension. When it is difficult to calculate the volume from the outer dimension, the volume of the expanded beads molded body can be obtained by the submersion method.

### (Shrinkage ratio of expanded beads molded body)

The expanded beads molded body obtained by in-mold molding of the expanded beads of the present invention can suppress the shrinkage ratio to be small. For example, the expanded beads molded body of the present invention can exhibit a shrinkage ratio of 2.5% or less, and can further exhibit a shrinkage ratio of 2.0% or less. Therefore, the present invention can provide an expanded beads molded body having a desired shape.

The shrinkage ratio herein refers to a dimensional change ratio of the expanded beads molded body with respect to the dimension of the mold used for in-mold molding, and is measured as follows. First, after in-mold molding, the expanded beads molded body taken out from the mold is left to stand in an environment of a temperature of 23°C and a relative humidity of 50% for 24 hours and aged. Thereafter, the dimension (LB) of the long side of the expanded beads molded body is measured. The ratio (([LA - LB]/LA) × 100) of the difference between the dimension (LA) of the long side of the mold and the dimension (LB) of the long side of the expanded beads molded body to the dimension (LA) of the long side of the mold is calculated to obtain a shrinkage ratio of the expanded beads molded body to the dimension of the mold.

### (Method for producing expanded beads molded body)

The expanded beads molded body of the present invention is produced by in-mold molding using the expanded beads of the present invention described above. The in-mold molding widely includes known in-mold molding methods using expanded beads. For example, the expanded beads molded body of the present invention is produced as follows. First, the expanded beads of the present invention are filled in a mold having a cavity corresponding to a shape of a desired expanded beads molded body, and the expanded beads filled in the mold are heated by applying a predetermined molding pressure to the expanded beads with a heating medium such as steam. The molding pressure can be adjusted, for example, in a range of 0.2 MPa (G) or more and 0.5 MPa (G) or less. In the present specification, (G) represents a gauge pressure, that is, a value of a pressure based on the atmospheric pressure. In this way, the expanded beads in the cavity are further expanded by heating, and the expanded beads are fuse-bonded to each other. Next, after completion of heating with steam or the like, the pressure in the cavity is released, and the mold and the molded body in the mold are quickly cooled. When it is confirmed that the pressure (surface pressure) generated on the inner surface of the mold has reached 0.04 MPa (G), the cooling is terminated, and the expanded beads molded body is taken out from the mold. The cooling method here is not particularly limited, and examples thereof include water cooling. By such a series of molding steps, an expanded beads molded body according to the shape of the cavity is obtained.

As the cooling time after in-mold molding, the time from the time point when heating with steam is completed and cooling is started to the time point when the pressure (surface pressure) generated on the inner surface of the mold reaches 0.04 MPa (G) is measured. The cooling time can be used as an index of the molding cycle of the expanded beads molded body.

### (Surface smoothness of expanded beads molded body)

The expanded beads molded body of the present invention can exhibit good surface smoothness despite containing a biomass raw material. From the viewpoint of providing an expanded beads molded body exhibiting particularly excellent surface smoothness, the biobased carbon content of the expanded beads molded body is preferably less than 20%, and more preferably 18% or less. For a specific method for evaluating the surface smoothness of the expanded beads, reference is made to the description of Examples described later.

### Examples

Hereinafter, the present invention will be described in detail with reference to Examples, but the present invention is not limited thereto. The expanding temperature and the expanding pressure in preparation of expanded beads using each base material resin are shown in Tables 1 and 2. As the molding pressure in the production of an expanded beads molded body, the lower limit molding pressure confirmed in the preliminarily performed production of an expanded beads molded body was adopted. Polypropylene resins used in Examples and Comparative Examples are as follows.

### <Biomass-derived polypropylene resin A>

- PPA1 (propylene homopolymer, product number HP456J, manufactured by LyondellBasell Industries N.V, flexural modulus 1500 MPa)
- PPA2 (propylene homopolymer, product number HP640J, manufactured by LyondellBasell Industries N.V, flexural modulus 1600 MPa)
- PPA3 (propylene-ethylene block copolymer, product number EP348U, manufactured by LyondellBasell Industries N.V, flexural modulus 950 MPa)

### <Fossil fuel-derived polypropylene resin B>

- PPB1 (propylene-ethylene random copolymer, ethylene component content 3.1%, biobased carbon content 0%, flexural modulus 950 MPa)

### <Example 1>

### (Preparation of resin beads)

A manufacturing apparatus including an extruder having an inner diameter of 50 mm and a strand forming die attached to the downstream side of the extruder was prepared.

A base material resin composed of biomass-derived polypropylene resin A (biomass-derived PP) and petroleum-derived polypropylene resin B (petroleum-derived PP) shown in Table 1 and zinc borate (0.1 parts by weight with respect to 100 parts by weight of the base material resin) as a cell controlling agent were supplied to the extruder and melted and kneaded to obtain a resin melt. The resin melt was introduced into the strand forming die, and the strand was extruded. The extruded strand was cooled with water and cut with a pelletizer to obtain resin beads having an average weight of 1.0 mg per bead.

### (Preparation of expanded beads body)

1 kg of the obtained resin beads and 3 L of water as an aqueous dispersion medium were supplied into a pressurizable pressure vessel having a content amount of 5 L. In addition, with respect to 100 parts by weight of the resin beads, 0.3 parts by weight of kaolin as an inorganic dispersant, 0.004 parts by weight (as an active ingredient) of a surfactant (trade name: NEOGEN, manufactured by DKS Co., Ltd., sodium dodecylbenzene sulfonate) were each added in the pressure vessel.

Subsequently, the temperature of the pressure vessel was raised by heating at a heating rate of 2°C/min while stirring until the temperature reached an expanding temperature (164.5°C), and thereafter, carbon dioxide as a blowing agent was inject into the pressure vessel, and the pressure was increased to 1.8 MPa (G), and the pressure was maintained at the same temperature and the same pressure for 15 minutes. As a result, a high-temperature peak was adjusted to appear in a DSC curve by DSC measurement of the resulting expanded beads.

Thereafter, the contents (resin beads and water) of the pressure vessel were released under atmospheric pressure to obtain expanded beads having an apparent density of 45 kg/m³.

### (Production of expanded beads molded body)

The obtained expanded beads were filled in a mold having a molding cavity capable of molding a rectangular parallelepiped expanded beads molded body of 250 mm length × 200 mm width × 20 mm height, and heating was performed by the following heating method. As the mold, a metal mold was used.

As the heating method, in a state where drain valves provided on both surfaces of the mold were opened, steam was supplied to the mold to perform preheating (exhaust step). Thereafter, steam was supplied from one side of the mold for heating, and steam was further supplied from the other side of the mold for heating. Subsequently, steam was supplied from both sides of the mold at a molding pressure of 0.3 MPa (G), which is the lower limit molding pressure shown in the table, for heating. After completion of heating, the pressure was released, and water cooling was immediately started, and water cooling was performed until the surface pressure by the expanding force of the expanded beads molded body reached 0.04 MPa (G). After completion of water cooling, the expanded beads molded body was taken out from the mold and designated as Example 1. The time required from the start of water cooling until the pressure (surface pressure) generated on the inner surface of the mold reached 0.04 MPa (G) was measured, and this was defined as the molding cycle (cooling time (seconds)) and shown in Table 1.

The base material resin and the expanded beads used in Example 1 were subjected to the measurement and evaluation described later. The expanded beads molded body as Example 1 was subjected to the measurement and evaluation described later. The results are shown in Table 1.

### <Examples 2 to 9, Comparative Examples 1 to 3>

Expanded beads molded bodies were produced in the same manner as in Example 1 described above except that the contents were changed to those shown in Tables 1 and 2, and these expanded beads molded bodies were designated as Examples 2 to 9 and Comparative Examples 1 to 3. Then, similarly to the measurement and evaluation related to Example 1, measurement and evaluation were also performed for other Examples and Comparative Examples. The results are shown in Tables 1 and 2.

### <Base material resin>

### (Biobased carbon content of polypropylene resin A)

The biobased carbon content of the polypropylene resin A blended in the base material resin was measured as follows in accordance with ASTM D6866-21.

Carbon dioxide (CO₂) was generated by using the polypropylene resin A blended in the base material resin as a resin to be subjected to measurement and burning the resin, and the carbon dioxide was purified in a vacuum line. Purified carbon dioxide was reduced with hydrogen using iron as a catalyst, thereby producing graphite (C). Thereafter, the graphite was packed in a cathode having an inner diameter of 1 mm by a hand press machine, fitted into a wheel, and mounted on a ¹⁴C-AMS dedicated apparatus based on a tandem accelerator manufactured by NEC Corporation. The number of ¹⁴C, a ¹³C concentration (¹³C/¹²C), and a ¹⁴C concentration (¹⁴C/¹²C) were measured by the apparatus. In the measurement, oxalic acid (HOxII) provided by the National Institute of Standards and Technology (NIST) was used as a standard sample. Measurement of the standard sample and the background sample was also performed simultaneously.

From the obtained measurement results, the ¹⁴C ratio of sample carbon to contemporary carbon in the standard sample was calculated, and then the deviation of the ¹³C concentration from the standard sample was corrected to obtain a corrected percent modern carbon (pMC) value.

The biobased carbon content was calculated using the corrected pMC value described above. As the atmospheric correction factor, the value from 2019 to 2021 described in ASTM D6866-21 was used (100.0 pMC). For the measurement of the biobased carbon content of the polypropylene resin according to the present invention, the biobased carbon content was determined using the atmospheric correction factor described in ASTM D6866 of the year in which the polypropylene resin was produced.

### (Melting point)

The melting point Tm_{A} of the polypropylene resin A blended in the base material resin was measured in accordance with JIS K7121:2012. At this time, as condition adjustment of a test piece, "(2) Case where melting temperature is measured after constant heat treatment" was adopted. Specifically, the peak top temperature of the melting peak determined by the DSC curve obtained when first, pellet-shaped polypropylene resin A (5 mg) was used as a test piece, and based on heat-flux differential scanning calorimetry described in JIS K7121:2012, the temperature is raised from 23°C to 200°C at a heating rate of 10°C/min, then lowered to 23°C at a cooling rate of 10°C/min, and raised again from 23°C to 200°C at a heating rate of 10°C/min is defined as the melting point Tm_{A} of the polypropylene resin A. As the measuring apparatus, a heat-flux differential scanning calorimeter (manufactured by SII NanoTechnology Inc., model number: DSC7020) was used.

The melting point was measured in the same manner as described above except that pellet-shaped polypropylene resin B (5 mg) was used, and the melting point Tm_{B} of the polypropylene resin B was measured. Alternatively, the melting point was measured in the same manner as described above except that a pellet-shaped base material resin (5 mg) was used, and the melting point Tm_{S} of the base material resin was measured.

### (Crystallization temperature Tc)

Using each of the polypropylene resin A and the polypropylene resin B as a measurement sample, the peak top temperature of the crystallization peak determined by heat-flux differential scanning calorimetry was determined based on JIS K7121:2012. The obtained temperatures were defined as the crystallization temperature Tc_{A} of the polypropylene resin A and the crystallization temperature Tc_{B} of the polypropylene resin B. As condition adjustment of a test piece, "(2) Case where melting temperature is measured after constant heat treatment" was adopted, and 10°C per minute was adopted as the cooling rate. When two or more crystallization peaks appear, the peak top temperature of the crystallization peak having the largest area was defined as the crystallization temperature.

### (Melt mass-flow rate (MFR))

The melt mass-flow rate (MFR_{A}) of the polypropylene resin A, the melt mass-flow rate (MFR_{B}) of the polypropylene resin B, and the melt mass-flow rate (MFR_{S}) of the base material resin were determined based on JIS K7210-1:2014 under the conditions of 230°C and a load of 2.16 kg.

In addition, the ratio (MFR_{A}/MFR_{B}) of MFR_{A} of the polypropylene resin A to MFR_{B} of the polypropylene resin B determined as described above was calculated.

### <Expanded beads>

### (High-temperature peak heat quantity, total heat quantity of fusion)

The high-temperature peak heat quantity and the total heat quantity of fusion of the expanded beads were determined from a DSC curve obtained by heating 1 to 3 mg of the expanded beads as a test piece at a heating rate of 10°C/min from 23°C to a temperature 30°C higher than the end time of the melting peak of the test piece based on the testing methods for heat of transitions of plastics described in JIS K7122:2012. Specifically, as described above with reference to Fig. 1, in the DSC curve obtained using each expanded bead, a straight line connecting point I corresponding to 80°C on the DSC curve and point II corresponding to the end temperature of melting of the expanded beads was drawn. The end temperature of melting is an end point on a high-temperature side of high-temperature peak b, and is an intersection of high-temperature peak b and the baseline on a higher-temperature side than high-temperature peak b in the DSC curve.

As shown in Fig. 1, a straight line connecting point I and point II was drawn, and then an intersection of a straight line passing through maximum point III existing between intrinsic peak a and high-temperature peak b and parallel to the vertical axis of the graph and a straight line connecting point I and point II was defined as IV.

Then, the area of a portion surrounded by a straight line connecting point I and point IV, a straight line connecting point III and point IV, and a DSC curve connecting point I and point III was defined as the area of intrinsic peak a. In addition, the area of a portion (shaded portion) surrounded by a straight line connecting point IV and point II, a straight line connecting point III and point IV, and a DSC curve connecting point III and point II was defined as the area of high-temperature peak b. The value of the total heat quantity of fusion (J/g) of the expanded beads was calculated from the sum of the area of intrinsic peak a and the area of high-temperature peak b obtained as described above, and the value of the high-temperature peak heat quantity (J/g) of the expanded beads was calculated from the area of high-temperature peak b.

### (Biobased carbon content)

Measurement was performed in the same manner as the method for measuring the biobased carbon content of the base material resin in accordance with ASTM D6866-21 except that expanded beads were used as the measurement sample.

### (Apparent density)

The expanded beads to be measured were allowed to stand for 24 hours or more in an environment of a temperature of 23°C, a relative humidity of 50%, and 1 atm. The expanded beads group thus obtained having weight W (g) was filled in a measuring cylinder, and by lightly tapping the horizontal surface several times with the bottom surface of the measuring cylinder, the filling height of the expanded beads group in the measuring cylinder was stabilized. The bulk volume V (L) of the expanded beads group indicated by the scale of the measuring cylinder was read, and weight W of the expanded beads group was divided by the bulk volume V of the expanded beads group (W/V). By converting the value thus obtained into a unit of kg/m³, the apparent density (kg/m³) of the expanded beads was obtained.

### (Average cell diameter)

A photograph of a cross section obtained by bisecting the expanded beads was taken. A straight line was drawn so that the area of the cross section of the expanded beads was substantially bisected on the photograph taken, and the value (L/N) obtained by dividing a length L of a line segment from a peripheral edge of the expanded beads to the opposing peripheral edge by the number N of all cells in contact with the line segment was defined as the average cell diameter of one expanded bead. This operation was performed on 10 or more expanded beads, and the arithmetic average value was defined as the average cell diameter of the expanded beads.

### (Closed cell ratio)

An expanded beads group having a bulk volume of about 20 cm³ was immersed in water to measure an apparent volume Va of the expanded beads group. Next, the expanded beads group of which the apparent volume Va had been measured was sufficiently dried, and then the value (true volume Vx) of the volume (sum of the volume of the resin constituting the expanded beads and the total cell volume of the closed cell portion in the expanded beads) of the expanded beads was measured in accordance with Procedure C described in ASTM-D2856-94. For the measurement of the true volume Vx, an air-comparison pycnometer type 1000 manufactured by Tokyo-Science Co., Ltd. was used.

Next, the closed cell ratio was calculated by the following formula (1). Using different measurement samples, the closed cell ratio was measured five times in the same procedure as described above, the arithmetic average value of the values obtained in each measurement was determined, and this was defined as the closed cell ratio of the expanded beads.
[Mathematical formula 2] Closed cell ratio (%) = (Vx - W/ρ) × 100/(Va - W/ρ)
Vx: True volume (cm³) of the expanded beads group measured by the above method
Va: Apparent volume (cm³) of the expanded beads group measured from an increase in water level when the expanded beads group is immersed in water in the measuring cylinder
W: Weight (g) of expanded beads group
ρ: Density (g/cm³) of resin constituting expanded beads

The lower limit molding pressure and the moldable range were evaluated according to the following criteria. It can be determined that the lower the lower limit molding pressure and the wider the moldable range, the more excellent the moldability of the expanded beads.

### (Lower limit molding pressure)

An expanded beads molded body was preliminarily produced in the same manner as in the production of each Example or each Comparative Example except for the molding pressure during in-mold molding. Then, the fuse-bond ratio, secondary expansion characteristics, and recovery characteristics described later were evaluated, and the lowest molding pressure among the molding pressures at which an expanded beads molded body that passed (Good) in all three items could be produced was defined as the lower limit molding pressure. In expanded beads from which an expanded beads molded body that passed in all three items could not be obtained, the lowest molding pressure among the molding pressures at which an expanded beads molded body that passed in two items of the fuse-bond ratio and the recovery characteristics could be produced was defined as the lower limit molding pressure.

### (Moldable range, evaluation of moldable range)

An expanded beads molded body was molded in the same manner as in each Example or each Comparative Example except that the molding pressure was changed at intervals of 0.02 MPa (G) from the lower limit molding pressure confirmed as described above. Then, using the obtained expanded beads molded body, the fuse-bond ratio, the secondary expansion characteristics, and the recovery characteristics were evaluated in the same manner as in the method described later. Then, the molding pressure at which an expanded beads molded body that passed (Good or higher) in all three items could be produced was determined as the molding pressure at which an expanded beads molded body can be molded, and evaluated as follows. Specific numbers in the moldable range were also shown.

Very Good... There are two or more ranges of the molding pressure at which an expanded beads molded body that passes in all three items is obtained.

Good... There is one range of the molding pressure at which an expanded beads molded body that passes in all three items is obtained.

Bad... There is no range of the molding pressure at which an expanded beads molded body that passes in all three items is obtained.

### <Expanded beads molded body>

### (Apparent density)

The apparent density of the expanded beads molded body was calculated by dividing the weight of the expanded beads molded body by the volume calculated based on the outer dimension.

### (Shrinkage ratio)

The dimensional change ratio (shrinkage ratio) of the expanded beads molded body with respect to the dimension of the mold used for in-mold molding was measured as follows. First, after in-mold molding, the expanded beads molded body taken out from the mold was left to stand in an environment of a temperature of 23°C and a relative humidity of 50% for 24 hours and aged. Thereafter, the dimension (LB) of the long side of the expanded beads molded body was measured. The ratio (([LA - LB]/LA) × 100) of the difference between the dimension (LA) of the long side of the mold and the dimension (LB) of the long side of the expanded beads molded body to the dimension (LA) of the long side of the mold was calculated to obtain a shrinkage ratio of the expanded beads molded body to the dimension of the mold.

### (Molding cycle)

As described above, after in-mold molding, pressure was released, water cooling was started, and water cooling was performed until the pressure (surface pressure) generated on the inner surface of the mold decreased to 0.04 MPa (G). At this time, the time from the start of water cooling until the pressure (surface pressure) generated on the inner surface of the mold decreased to 0.04 MPa (G) was measured, and this was used as an index of the molding cycle as the cooling time (seconds). It can be determined that the shorter the water cooling time, the better the molding cycle.

### (Fuse-bond ratio)

A test piece (100 mm length × 100 mm width × thickness: thickness of the expanded beads molded body) was cut out from the central portion of the expanded beads molded body, and a cut of about 5 mm was made in the thickness direction of each test piece with a cutter knife, then the test piece was fractured from the cut portion. Next, on the fracture surface of the expanded beads molded body, the number (n) of expanded beads and the number (b) of expanded beads that had undergone material fracture were measured. Then, the number (b) of expanded beads that had undergone material fracture with respect to the total number (n) of expanded beads was expressed as a percentage and defined as the fuse-bond ratio (%), and this was evaluated as follows. The numerical values of the fuse-bond ratio (%) obtained as described above were shown in Tables 1 and 2.

Good... The fuse-bond ratio was 80% or more.

Bad... The fuse-bond ratio was less than 80%.

### (Secondary expansion characteristics)

The surface of the expanded beads molded body was visually observed, and the secondary expansion characteristics were evaluated as follows.

Good... The expanded beads gaps on the surface of the expanded beads molded body are sufficiently filled.

Bad... The expanded beads gaps on the surface of the expanded beads molded body are clearly not filled.

### (Recovery characteristics)

After in-mold molding, the expanded beads molded body taken out from the mold was left to stand in an environment of a temperature of 23°C and a relative humidity of 50% for 24 hours and aged.

The aged expanded beads molded body was viewed from above in the thickness direction, and the thicknesses of the expanded beads molded body were measured at positions 10 mm away from the four corners toward the center of the surface. Among these thicknesses, the largest value was defined as the thickness of the corner portion of the expanded beads molded body. Separately from this, the expanded beads molded body was viewed from above in the thickness direction, the thickness of the expanded beads molded body was measured at a central position in both the longitudinal direction and the lateral direction, and this value was defined as the thickness of the central portion of the expanded beads molded body. Then, the ratio (%) of the thickness of the central portion to the thickness of the corner portion of the expanded beads molded body was calculated and evaluated as follows.

Good... The ratio (%) was 90% or more.

Bad... The ratio (%) was less than 90%.

### (Biobased carbon content)

The biobased carbon content of the expanded beads molded body was measured in the same manner as the method for measuring the biobased carbon content of the base material resin in accordance with ASTM D6866-21 except that the expanded beads molded body was used as the resin.

### (Closed cell ratio)

The closed cell ratio of the expanded beads molded body was measured in the same manner as in the measurement of the closed cell ratio of the expanded beads described above except that a cube of 15 mm square cut out from the inside of the expanded beads molded body was used as the object to be measured.

### (Surface smoothness)

The surface smoothness of the expanded beads molded body was visually observed and evaluated as follows.

Very Good... The surface of the expanded beads molded body is in a good surface state without irregularities due to wrinkles, shrinkage, or depression.

Good... The surface of the expanded beads molded body has slight irregularities due to wrinkles, shrinkage, or depression.

Bad... The surface of the expanded beads molded body has significant irregularities due to wrinkles, shrinkage, or depression.

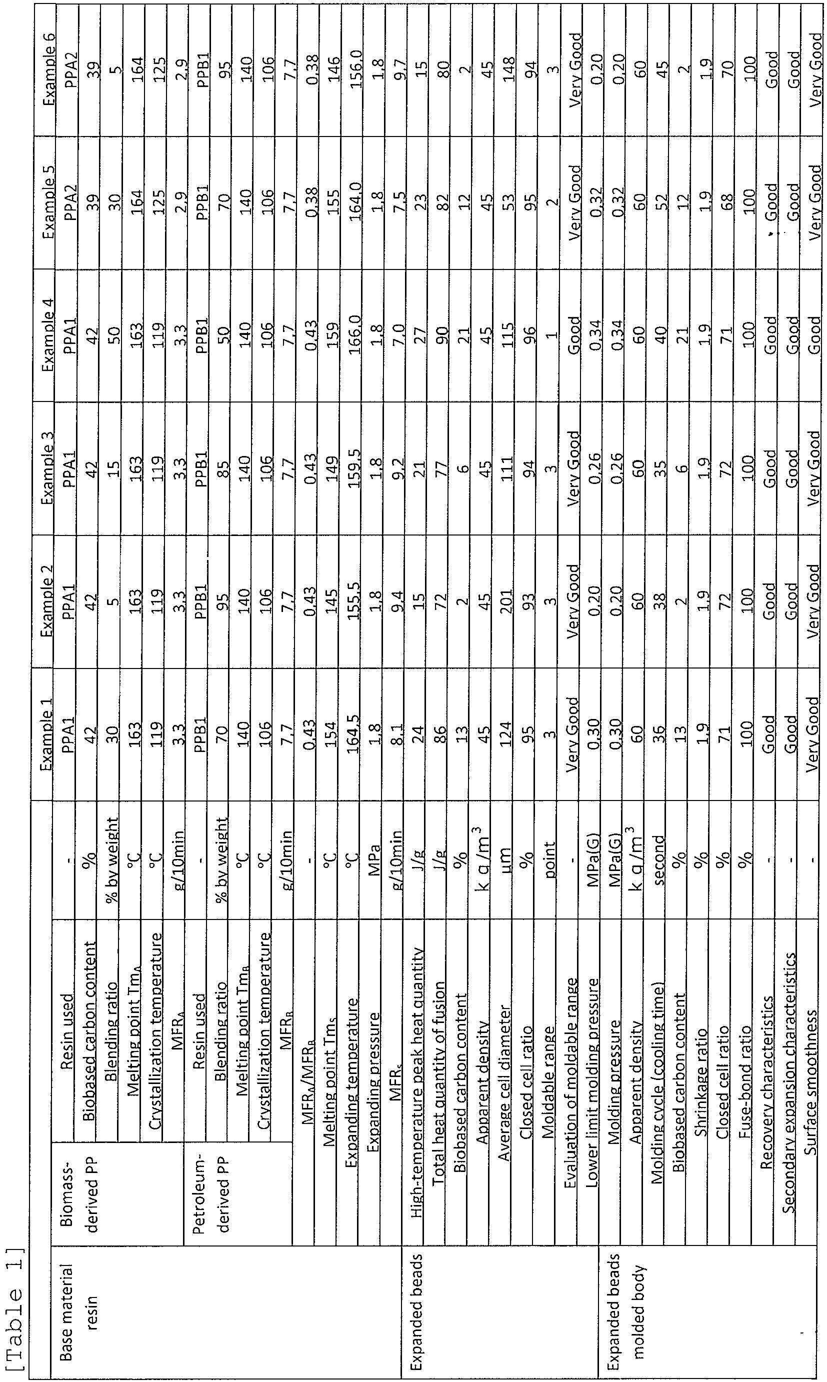

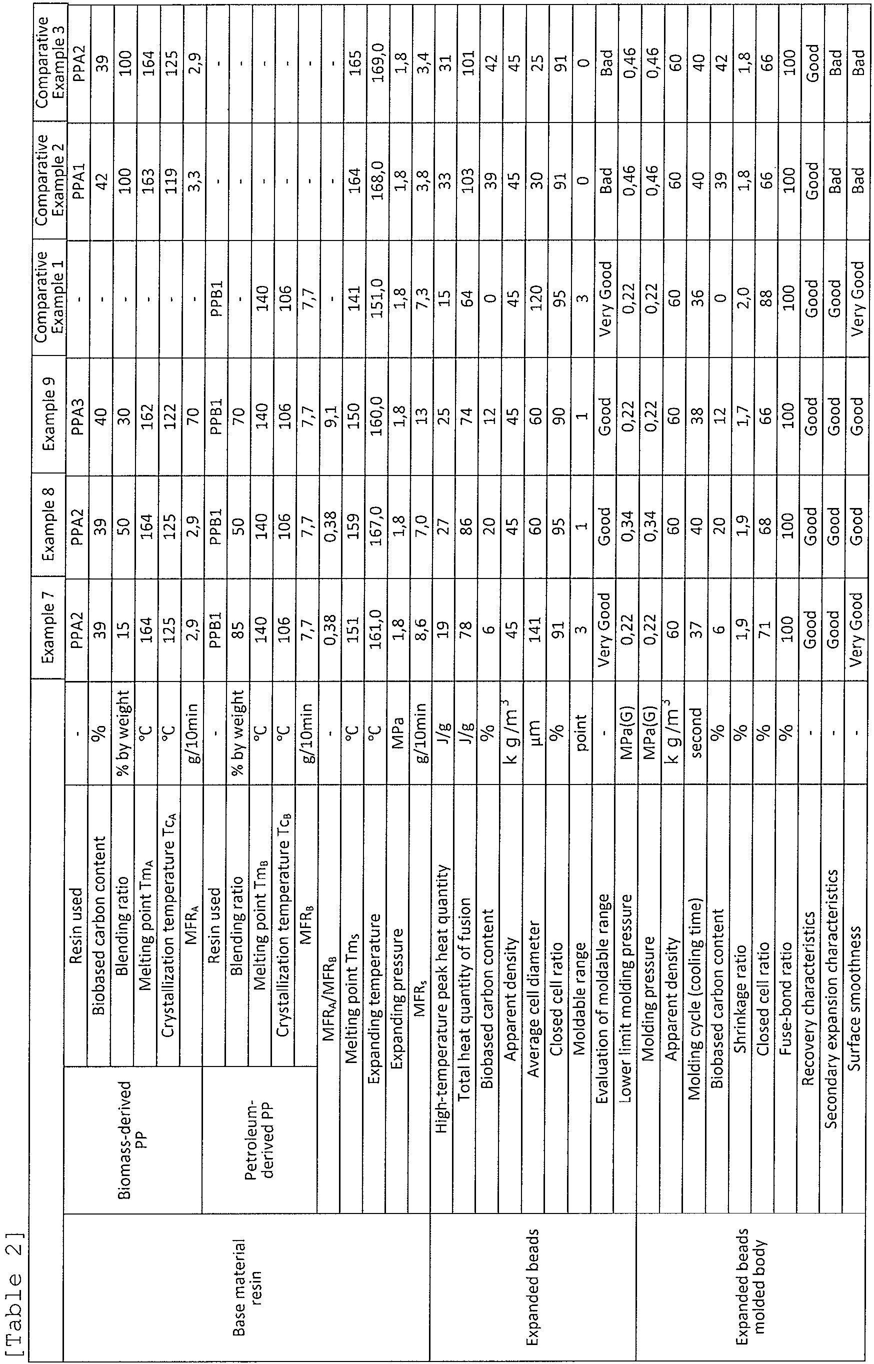

The embodiment includes the following technical idea.
(1) Polypropylene resin expanded beads, wherein
   a base material resin of the expanded beads contains biomass-derived polypropylene resin A containing a biomass-derived monomer component in a molecular chain and fossil fuel-derived polypropylene resin B, and
   the base material resin contains 3% by weight or more and 60% by weight or less of the biomass-derived polypropylene resin A and 40% by weight or more and 97% by weight or less of the fossil fuel-derived polypropylene resin B (a total of both is 100% by weight).
(2) The polypropylene resin expanded beads according to (1), wherein a biobased carbon content of the biomass-derived polypropylene resin A measured by ASTM D6866-21 is 10% or more and 50% or less.
(3) The polypropylene resin expanded beads according to (1) or (2), wherein a biobased carbon content of the expanded beads measured by ASTM D6866-21 is 1% or more and 30% or less.
(4) The polypropylene resin expanded beads according to any one of (1) to (3), wherein a melting point Tm_{S} of the base material resin is 135°C or higher and 160°C or lower.
(5) The polypropylene resin expanded beads according to any one of (1) to (4), wherein a melting point Tm_{A} of the biomass-derived polypropylene resin A is 160°C or higher and 170°C or lower, and a melting point Tm_{B} of the fossil fuel-derived polypropylene resin B is 135°C or higher and 145°C or lower.
(6) The polypropylene expanded beads according to any one of (1) to (5), wherein the biomass-derived polypropylene resin A is a homopolymer of propylene, and a melt mass-flow rate (MFR_{A}) of the biomass-derived polypropylene resin A measured at 230°C under a load of 2.16 kg is 1 g/10 min or more and 5 g/10 min or less.
(7) The polypropylene resin expanded beads according to any one of (1) to (6), wherein the fossil fuel-derived polypropylene resin B is a propylene-ethylene random copolymer, and an ethylene component content of the propylene-ethylene random copolymer is 1% by weight or more and 5% by weight.
(8) The polypropylene resin expanded beads according to any one of (1) to (7), wherein a melt mass-flow rate (MFR_{S}) of the base material resin measured at 230°C under a load of 2.16 kg is 5 g/10 min or more and 15 g/10 min or less.
(9) The polypropylene resin expanded beads according to any one of (1) to (8), wherein a ratio (MFR_{A}/MFR_{B}) of the melt mass-flow rate (MFR_{A}) of the biomass-derived polypropylene resin A measured at 230°C under a load of 2.16 kg to a melt mass-flow rate (MFR_{B}) of the fossil fuel-derived polypropylene resin B measured at 230°C under a load of 2.16 kg is 0.2 or more and 0.8 or less.
(10) The polypropylene resin expanded beads according to any one of (1) to (9), wherein in a DSC curve obtained by heat-flux differential scanning calorimetry (DSC) in which the expanded beads are heated from 23°C to 200°C at a heating rate of 10°C/min, the DSC curve has a main melting peak and a melting peak (high-temperature peak) having a peak top temperature on a higher-temperature side than a peak top temperature of the main melting peak, and a heat quantity of fusion of the high-temperature peak is 10 J/g or more and 30 J/g or less.
(11) A polypropylene resin expanded beads molded body obtained by in-mold molding of the polypropylene resin expanded beads according to any one of (1) to (10).

## Claims

1. Polypropylene resin expanded beads, wherein
a base material resin of the expanded beads contains biomass-derived polypropylene resin A containing a biomass-derived monomer component in a molecular chain and fossil fuel-derived polypropylene resin B, and
the base material resin contains 3% by weight or more and 60% by weight or less of the biomass-derived polypropylene resin A and 40% by weight or more and 97% by weight or less of the fossil fuel-derived polypropylene resin B (a total of both is 100% by weight).

2. The polypropylene resin expanded beads according to claim 1, wherein a biobased carbon content of the biomass-derived polypropylene resin A measured by ASTM D6866-21 is 10% or more and 50% or less.

3. The polypropylene resin expanded beads according to claim 1 or 2, wherein a biobased carbon content of the expanded beads measured by ASTM D6866-21 is 1% or more and 30% or less.

4. The polypropylene resin expanded beads according to any one of claims 1 to 3, wherein a melting point Tm_{S} of the base material resin is 135°C or higher and 160°C or lower.

5. The polypropylene resin expanded beads according to any one of claims 1 to 4, wherein a melting point Tm_{A} of the biomass-derived polypropylene resin A is 160°C or higher and 170°C or lower, and a melting point Tm_{B} of the fossil fuel-derived polypropylene resin B is 135°C or higher and 145°C or lower.

6. The polypropylene resin expanded beads according to any one of claims 1 to 5, wherein the biomass-derived polypropylene resin A is a homopolymer of propylene, and a melt mass-flow rate (MFR_{A}) of the biomass-derived polypropylene resin A measured at 230°C under a load of 2.16 kg is 1 g/10 min or more and 5 g/10 min or less.

7. The polypropylene resin expanded beads according to any one of claims 1 to 6, wherein the fossil fuel-derived polypropylene resin B is a propylene-ethylene random copolymer, and an ethylene component content of the propylene-ethylene random copolymer is 1% by weight or more and 5% by weight.

8. The polypropylene resin expanded beads according to any one of claims 1 to 7, wherein a melt mass-flow rate (MFR_{S}) of the base material resin measured at 230°C under a load of 2.16 kg is 5 g/10 min or more and 15 g/10 min or less.

9. The polypropylene resin expanded beads according to any one of claims 1 to 8, wherein a ratio (MFR_{A}/MFR_{B}) of the melt mass-flow rate (MFR_{A}) of the biomass-derived polypropylene resin A measured at 230°C under a load of 2.16 kg to a melt mass-flow rate (MFR_{B}) of the fossil fuel-derived polypropylene resin B measured at 230°C under a load of 2.16 kg is 0.2 or more and 0.8 or less.

10. The polypropylene resin expanded beads according to any one of claims 1 to 9, wherein in a DSC curve obtained by heat-flux differential scanning calorimetry (DSC) in which the expanded beads are heated from 23°C to 200°C at a heating rate of 10°C/min, the DSC curve has a main melting peak and a melting peak (high-temperature peak) having a peak top temperature on a higher-temperature side than a peak top temperature of the main melting peak, and a heat quantity of fusion of the high-temperature peak is 10 J/g or more and 30 J/g or less.

11. A polypropylene resin expanded beads molded body obtained by in-mold molding of the polypropylene resin expanded beads according to any one of claims 1 to 10.
